# EUROPEAN PATENT SPECIFICATION

(11) **EP 0 573 103 B1**
(45) Date of publication and mention of the grant of the patent: **11.08.1999**
(21) Application number: 93201506.8
(22) Date of filing: 26.05.1993
(51) Int. Cl.: H04B 1/66

(54) **Digital transmission system**
Digitales Übertragungssystem
Système de transmission numérique

(30) Priority: 02.06.1992 EP 92201579
(43) Date of publication of application: 08.12.1993
(73) Proprietor: Koninklijke Philips Electronics N.V., 5621 BA Eindhoven (NL)
(72) Inventor: Kneepkens, Franciscus Antonius, NL-5656 AA Eindhoven (NL); Lokhoff, Gerardus Cornelis Petrus, NL-5656 AA Eindhoven (NL)
(74) Representative: van der Kruk, Willem Leonardus

(56) References cited:
- EP-A- 0 457 391
- DE-A- 4 102 080

## Description

The invention relates to a transmitter and a receiver in a digital transmission system for transmitting and receiving a wideband signal *via* a transmission medium, to an encoder apparatus for encoding the wideband signal, to a decoder apparatus and to a method for transmitting the wideband signal.

EP 402.973 A1, Reference (2) in the list of References at the end of this Application discloses a transmitter for a digital transmission system for transmitting a wideband signal *via* a transmission medium, which signal is sampled at a given sampling frequency F_{S}, for example a digital audio signal, which transmitter comprises
- an input terminal for receiving the wideband signal,
- signal splitting means for generating, in response to the wideband signal, a plurality of M narrow-band sub-signals at a decreased sampling frequency, for which purpose the splitting means split up the wideband signal into consecutive sub-bands having band numbers m which increase with the frequency, in which m complies with 1 ≤ m ≤ M, a sub-signal being composed of consecutive signal blocks, each signal block comprising q samples,
- bit allocation means for generating bit allocation information indicating the quantity of bits by which q samples of a signal block are represented in a sub-band, and for applying the bit allocation information to
- quantizing means coupled to the signal splitting means and being adapted to quantize the M sub-signals in blocks in response to the bit allocation information of the bit allocation means,
- means for accommodating the quantized sub-signals and the bit allocation information in a frame of a second digital signal which is composed of consecutive frames,
- coding means for converting the second digital signal into a third digital signal so that it is suitable to be transmitted *via* the transmission medium, and
- means for applying the third digital signal to the transmission medium. This is a transmitter comprising a sub-band coder for sub-band coding the wideband signal. The transmission medium may be a magnetic medium. The transmitter may then be a magnetic recording apparatus of the DCC type as described in more extensive detail in EP 457.390 A1 and EP 457.391 Al, the References (6a) and (6b) in the list of References.

It is an object of the invention to provide two basic proposals for further improving the transmitter so that an even better signal transmission can be realised.

In the first proposal the transmitter is characterized in that it further comprises
- signal processing means having an input coupled to the input terminal, an output and a control signal input,
- second signal splitting means having an input coupled to the output of the signal processing means for generating, in response to the processed digital signal of the signal processing means, a plurality of M sub-signals at a decreased sampling frequency, for which purpose the second splitting means split up the processed wideband signal into consecutive sub-bands having band numbers m which increase with the frequency, in which m complies with 1 ≤ m ≤ M, in that the bit allocation means are coupled to the second splitting means for deriving the bit allocation information from the sub-signals, and in that the signal processing means are adapted to process the wideband signal in dependence upon a signal processing control signal which is applied to the control signal input of the signal processing means.

In the second proposal the transmitter is characterized in that it further comprises
- correction means coupled to the bit allocation means and to the quantizing means, which correction means have a control signal input, said correction means being adapted to correct the bit allocation information of the bit allocation means in dependence upon a signal processing control signal which is applied to the control signal input of the correction means and for applying the corrected bit allocation information to the quantizing means.

The invention is based on the following recognition.

Transmitter-receiver systems such as recording and reproducing apparatus are generally formed in such a way that the total transmission chain has a flat transfer characteristic as a function of the frequency.

Moreover, signal processors are increasingly being used in audio reproducing apparatus, with which processors the reproduced signal is additionally processed at the receiver end to obtain a desired spatial acoustic effect. An example is reverberation. If the reproduced signal is additionally processed in this way, the listener will be given the impression of being in a concert hall or in a church. However, also other types of signal processing operations such as frequency corrections are possible to obtain a desired additional effect in the reproduction of, for example jazz, classical music or disco music.

It is an object of the invention to adapt the information transmitted *via* the transmission medium in such a way in the transmitter that normal transmission is possible, at which the flat transfer characteristic is maintained, but that the additional signal processing operation is also possible at the reproducing end. In fact, the invention realises an optimization of the bit allocation in the transmitter in such a way that the normal transmission remains possible, while moreover an optimum reproduction of the special effects can be realised.

In the two above-mentioned proposals this is realised by taking the additional signal processing operation which will be desired in the receiver already into account in the bit allocation. In fact, in the bit allocation a worst case situation is taken into account so that sufficient bits are allocated to realise a satisfactory reproduction in both situations, *viz*. that of the normal reproduction and that of the reproduction with the additional signal processing operation.

If the signal is amplified to a relatively larger extent in a given frequency range when the additional signal processing operation is performed, this larger amplification will have to be taken into account in the bit allocation by applying more bits to the samples in the signal in the relevant frequency range. After quantization, the samples are then represented by more bits.

If all available bits are allocated in the normal mode of allocating bits, as described in References (6a) and (6b), the extra allocation of bits to a number of samples means that fewer bits should be allocated to other samples. This can be realised by taking bits off those samples to which more than a required minimum number of bits have already been allocated in the normal bit allocation procedure. If not all bits are allocated in the normal bit allocation procedure, there are still bits left to realise the extra allocation without taking bits off other samples.

The transmitters according to the invention may be further characterized in that the transmitter comprises means for applying the signal processing control signal to the transmission medium. This creates the possibility of detecting the signal processing control signal at the receiver end again so that the additional signal processing operation at the receiver end can be realised automatically, *viz*. by applying the detected signal processing control signal to the signal processing means of the receiver.

The signal processing control signal may be additionally applied to a display of the receiver. Under the influence of this control signal the display may then visualize an indication of the type of the additional signal processing operation performed on the signal.

It is to be noted that document (2) describes how a frequency emphasis is performed in the receiver on the audio information to be reproduced, so as to compensate for a pre-emphasis already performed on the audio information at the pick-up end. To render this frequency emphasis possible upon reproduction, information indicating the type of frequency emphasis to be used is transmitted. This frequency emphasis is thus intended to compensate for imperfections in the transmission channel. Consequently, it is not information indicating that a signal processing operation must be performed to obtain an additional effect such as, for example a spatial acoustic effect.

These and other aspects of the invention will be apparent from and elucidated with reference to the embodiments described hereinafter.

In the drawings
Fig. 1 shows the transmitter in the transmission system,
Fig. 2 shows the second digital signal generated by the transmitter,
Fig. 3 shows a part of a second embodiment of the transmitter according to the invention,
Fig. 4 shows an embodiment of the correction means in Fig. 3, and
Fig. 5 shows an embodiment of a receiver.

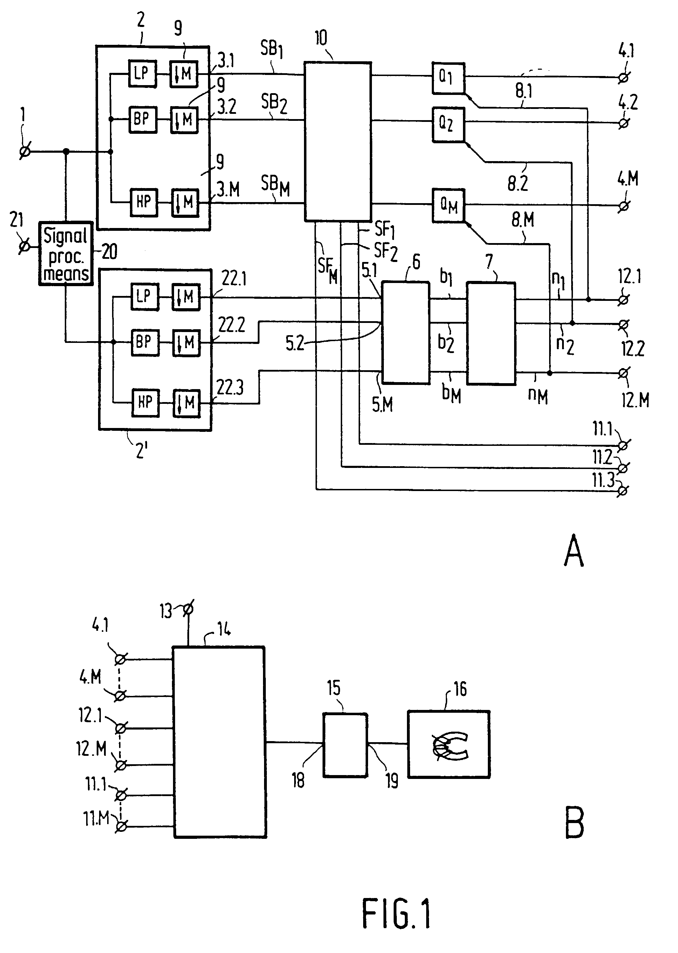

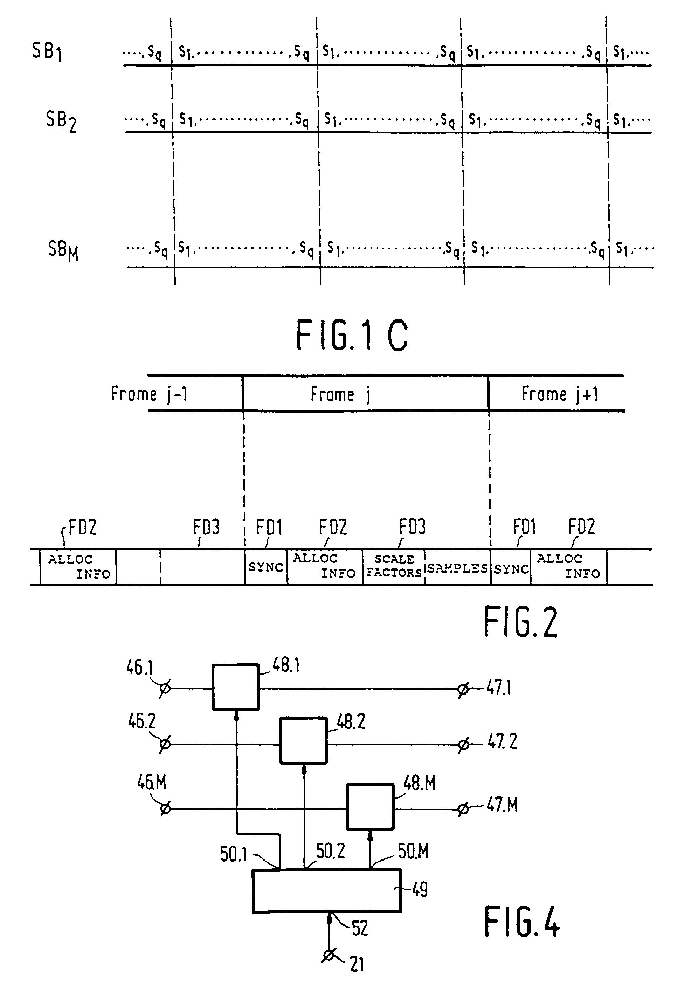

Fig. 1 shows the coding device of the transmitter in Fig. 1a. A wideband digital signal is applied to an input terminal 1. This may be an audio signal having a bandwidth of approximately 20 kHz. The audio signal may be a stereo audio signal. In that case only one of the two signal parts (the left or the right signal part) of the stereo audio signal will be described. The other signal part is treated identically.

The input 1 receives, for example 16-bit samples of, for example the left signal part of the audio signal at a sampling frequency of 44 kHz. The audio signal is applied to a sub-band coder 2 which comprises splitting means. The splitting means in the sub-band coder 2 distribute the audio signal over M sub-bands by means of a plurality of M filters, *viz.* a low-pass filter LP, M-2 bandpass filters BP and a high-pass filter HP. M is equal to, for example 32. The M sub-band signals are decreased in sampling frequency in the blocks denoted by the reference numeral 9. In these blocks the sampling frequency is decreased by a factor of M. The signals thus obtained are presented at the outputs 3.1, 3.2, ..., 3.M. The signal in the lowest sub-band SB₁ is presented at the output 3.1. The signal in the lowest but one sub-band SB₂ is presented at the output 3.2. The signal in the highest sub-band SB_{M} is present at the output 3.M. The signals at the outputs 3.1 to 3.M are in the form of consecutive samples which are expressed in 16 or more, for example 24-bit numbers. In the relevant embodiment all sub-bands SB₁ to SB_{M} have the same width.

However, this is not necessary. In the prior art publication (3), Krasner, for example a division into a number of sub-bands is given whose bandwidths approximately correspond to the bandwidths of the critical bands of the human ear in the respective frequency ranges.

The operation of the sub-band coder 2 will not be further explained because it has already been described extensively. To this end reference is made to References (1), (3) and (5).

The sub-band signals are combined in consecutive signal blocks of q consecutive samples, see Fig. 1c, and are applied to an associated quantizer Q₁ to Q_{M}. In a quantizer Qₘ the samples are quantized to form quantized samples with a number of bits nₘ which is smaller than 16.

Fig. 1 shows how the left sub-band signals are applied to an associated quantizer Qₘ in signal blocks of q consecutive samples. Similarly, the right sub-band signals are applied to an associated quantizer (not shown) in signal blocks of q consecutive samples. During quantization the signal blocks (groups) of q consecutive samples of the sub-band signal parts are quantized to a smaller number of bits. q is equal to, for example 12. The q samples in a signal block are first scaled. This scaling is effected in the block denoted by 10 by dividing the amplitudes of the q samples by the amplitude of the sample having the largest absolute value in the signal block. The amplitude of the sample having the largest amplitude in the signal block of the sub-band SBₘ yields the scale factor SFₘ, see document (2). Subsequently the amplitudes of the scaled samples, which are now within an amplitude range between -1 and +1, are quantized.

Prior-art document (2) extensively describes this quantization, see Figs. 24, 25 and 26 and the associated description in this document.

The quantized samples in the sub-bands SB₁ to SB_{M} are subsequently presented at the outputs 4.1 to 4.M.

The input terminal 1 is also coupled to an input of signal processing means 20. The signal processing means 20 perform a signal processing operation on the input signal in such a way that the desired additional effect, as described hereinbefore, is obtained. This may mean that the signal processing means 20 add, for example reverberation to the audio signal, so that during reproduction a listener is given the impression of being in a concert hall or a church. The signal processing means 20 may also perform a frequency correction on the input signal, or a compression or expansion of the dynamic range. Such signal processing operations are often used for jazz or disco music.

The signal applied to the input terminal 1 may be an analog signal. The D/A conversion can only take place downstream of the processor 20. In that case a second A/D converter is incorporated in the connection between the input terminal 1 and the input of the splitting means 2, and downstream of the branch to the signal processor 20. The signal processor 20 is now analog. It is alternatively possible for the A/D conversion to take place upstream of the signal processor 20, for example in the connection between the input terminal and the input of the splitting means 2 and upstream of the branch to the signal processor 20. In that case the processor 20 is digital.

The signal processor 20 has a control signal input 21 to which a signal processing control signal is applied. Under the influence of the signal processing control signal which is indicative of the type of signal processing operation which can be performed on the input signal, the signal processor 20 processes the input signal in accordance with this type of signal processing operation. The signal thus processed is applied to the input of second splitting means 2' which are similar to the splitting means 2. Consequently, M sub-band signals obtained from the processed input signal appear at the outputs 22.1 to 22.M.

The outputs 22.1 to 22.M are coupled to the inputs 5.1 to 5.M, respectively of means 6 for determining the need of bits. The means 6 for determining the need of bits determine the bit need bₘ for signal blocks, which correspond to one another with respect to time, of q samples of the sub-band signals of the processed signal in the sub-bands SB₁ to SB_{M}. The bit need bₘ is a number which is in relation to the number of bits with which the q samples in a signal block of q samples in a sub-band signal of the processed signal would have to be quantized in the sub-band with the serial number of m.

The bit needs b₁ to b_{M}, derived by the means 6 for determining the need of bits, are applied to bit allocation means 7. Starting from the bit needs b₁ to b_{M}, the bit allocation means 7 determine the real number of bits n₁ to n_{M} with which the q samples of the corresponding signal blocks in the sub-band signals obtained from the processed signal are quantized. Control signals corresponding to the numbers n₁ to n_{M} are applied to the respective quantizers Q₁ to Q_{M} *via* the leads 8.1 to 8.M. The special feature thus is that the signal which is not processed in the signal processor 20 is quantized on the basis of the bit allocation information n₁ to n_{M} obtained from the signal processed by the signal processor 20.

It is of course evident that due to the introduction of a correct delay in the signal path of the unprocessed signal, or, in contrast, in the signal path of the processed signal, *viz*. in the signal path having the shortest delay, it can be ensured that the bit allocation information for a given set of M corresponding signal blocks is available at the outputs of the bit allocation means 7 at the instant when the relevant set of M corresponding signal blocks is present at the inputs of the quantizers Q₁ to Q_{M}.

The documents (6a) and (6b) of the list of References extensively describe how the means 6 for determining the bit needs and the bit allocation means 7 can function.

The quantized samples in the signal blocks of the sub-band signals are subsequently applied to inputs 4.1 to 4.M of a signal combination unit 14. The bit allocation information, which is composed of the numbers n₁ to n_{M}, is also applied after a possible conversion to inputs 12.1 to 12.M of the combination unit 14. Document (2) indicates that the numbers in the bit allocation information indicating the number of bits by which samples are represented are converted to y-bit code words in which y is equal to 4, see Fig. 9 in document (2). The scale factor information, which is composed of the scale factors SF₁ to SF_{M}, is also applied after a possible conversion to the inputs 11.1 to 11.M of the combination unit 14.

Fig. 1B shows the second part of the transmitter which in addition to the combination unit 14 comprises a second coder 15 and means 16 for applying the signal presented at its input to a transmission medium. This transmission medium is a magnetic record carrier in this case.

In addition to the samples, the bit allocation information and the scale factor information for the left signal parts in the sub-bands, the samples, the bit allocation information and the scale factor information for the right signal parts in the sub-bands are of course also applied to the combination unit 14. The unit 14 combines the signals and accommodates them serially in consecutive frames of a second digital signal which is presented at its output.

Fig. 2 shows the format of this second digital signal. This format is described extensively in publication (2) in the list of References. Fig. 2 shows the second digital signal with the consecutive frames j-1, j, j+1 and shows how a frame may be built up. The frame comprises a first frame part FD1 which may comprise synchronization information, a second frame part FD2 which comprises the allocation information and a third frame part FD3. This third frame part comprises the scale factor information first, followed by the samples of the quantized signals in the sub-bands. For a further description reference is made to publication (2).

The second digital signal is applied to the input 18 of the second coder 15. In this coder 15 the second digital signal is coded in such a way that an error correction of the received information is possible at the receiver end. To this end, for example a Reed Solomon coding and possibly an interleaving is performed on the second digital signal. The signal is further coded in such a way that the information to be transmitted is suitable for transmission *via* the transmission medium. To this end, for example an 8-to-10 conversion may be performed on the 8-bit words constituting the signal. Such an 8-to-10 conversion is described, for example in EP-A-150082 in the name of the Applicant. In this conversion the information words are converted from 8-bit code words to 10-bit code words.

The third digital signal thus obtained is presented at the output 19. This output 19 is coupled to the input of means 16 which are formed as recording means 16 for recording the third digital signal on a magnetic record carrier.

The control signal input 21 is preferably also coupled to an input 13 of the unit 14. The unit 14 is then also adapted to apply the signal processing control signal to the frames and to store information which is related to this control signal in a frame part of the frames, preferably in the first frame part FD1.

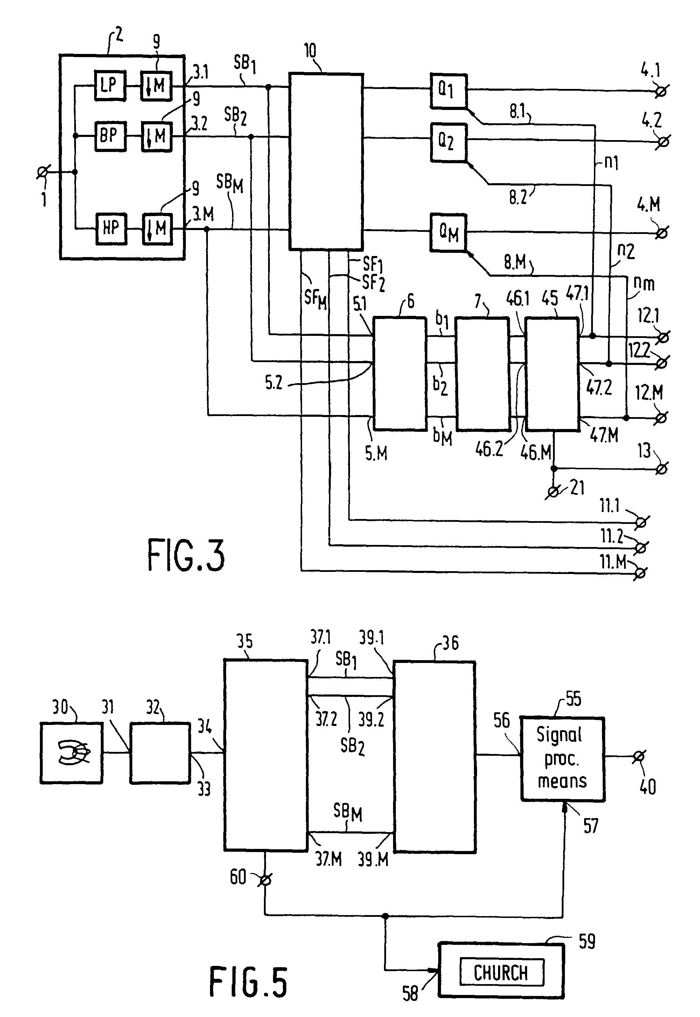

Fig. 3 shows the first part of a second embodiment of the transmitter according to the invention. This part could be used instead of the part shown in Fig. 1a of the transmitter of Fig. 1. The part of Fig. 3 shows great resemblance to the part of Fig. 1a, with the difference that the signal processing means 20 and the second splitting means 2' have been omitted, while a correction unit 45 is added between the bit allocation means 7 and the leads 8.1 to 8.M to the quantizers Q₁ to Q_{M}. The inputs 5.1 to 5.M are further coupled in known manner to the outputs 3.1 to 3.M of the splitting means 2. The device without the correction means 45 would code the input signal in known manner, and this in such a way that a possible additional signal processing at the receiver end would not be taken into account. Under the influence of the signal processing control signal applied to the control signal input 21, the correction means 45 now correct the bit allocation information of the bit allocation means 7 in such a way that this signal processing operation at the receiver end is taken into account. In fact, this means that the correction means 45 convert the bit allocation information of the bit allocation means 7 to the allocation information n₁ to n_{M} as obtained by means of the device of Fig. 1.

The correction means may be formed in the way as is shown in Fig. 4. An input 46.m is coupled to an output 47.m *via* a combination unit 48. m. The control signal input 21 is coupled to an input 52 of a microprocessor 49. Outputs 50.1 to 50.M of the microprocessor 49 are coupled to second inputs of the combination units 48.1 to 48.M.

Under the influence of a control signal which is presented at the input 21, the microprocessor 49 generates correction values at one or more outputs 50.1 to 50.M, which values are applied to the combination units 48.1 to 48.M. Dependent on the type of control signal, and hence dependent on the type of signal processing operation performed on the audio information at the receiver end, other correction values are supplied from the outputs 50.1 to 50.M. The sets of correction values for the different control signals, hence for the different signal processing operations, may be stored, for example in associated memory sites in the microprocessor 49 and are read from the associated memory sites when a control signal is applied. The correction values are, for example values (in numbers of bits per sample) which must be added to the values applied by the bit allocation means 7 to the inputs 46.1 to 46.M.

For "reverberation" this could mean, for example that a different set of correction values must be generated each time for consecutive signal blocks of q samples.

Fig. 5 shows diagrammatically an embodiment of the receiver according to the invention. The receiver comprises means 30 for receiving the third digital signal from the transmission medium. In this case the means 30 are formed as read means for reading the information from a magnetic record carrier. The third digital signal which has been read is applied to an input 31 of error correction means 32. In the means 32 a 10-to-8 conversion is realised first. Subsequently, an error correction and a possible de-interleaving operation is performed on the information which has been read. The signal thus decoded corresponds again to the digital signal as is shown in Fig. 2. This signal is presented at an output 33. As is shown in Fig. 2, the means 35 derive the allocation information, the scale factor information and the samples for each signal block in each sub-band from the frames. After dequantization and multiplication by the scale factors, the sub-band signals SB₁ to SB_{M} then appear at the outputs 37.1 to 37.M. These subband signals are presented at inputs 39.1 to 39.M of synthesis filter means 36 which compose a replica of the wideband signal from the sub-band signals. The operation of these synthesis filter means 36 has been described extensively in publication (5) in the list of References. The replica of the wideband signal is presented at an input 56 of signal processing means 55 by means 36, possibly after D/A conversion. After processing in the processing means 55 the signal thus processed is presented at an output 40 of the receiver. This is, for example the left signal part of the original signal. It is of course evident that the means 35 have M outputs at which the sub-band signals of the right signal part are available. Synthesis filter means (not shown) such as the filter means 36 are present to reconstruct the original right signal part from these sub-band signal parts.

The means 35 possibly also derive the signal processing control signal from the frames and apply this control signal to an output 60 which is coupled to a control signal input 57 of the signal processing means 55. The operation of the signal processing means 55 is identical to the operation of the signal processing means 21 as described with reference to Fig. 1a.

The output 60 may be further coupled to an input 58 of a display 59. Under the influence of the control signal applied to the display 59, the display shows which type of signal processing operation has been performed on the audio signal by the processing means 55.

It is to be noted that the greater part of the description of the invention refers to coding and transmission of a monosignal. However, the invention is not limited thereto. The invention is also applicable to coding a stereo signal in which two signal parts, *viz*. left and right are present in each sub-band. The invention is also applicable to coding devices in which one or more of the sub-band signals can be coded in a stereo intensity mode. For an explanation of the intensity mode coding reference is made to publications (2) and (4) in the list of References. It is also to be noted that the invention is not limited to a transmitter in which the splitting means split up the wideband signal into sub-bands, but that instead a transform coding may alternatively be employed in the splitting means.

### References

(1) EP-A-289.080
(2) EP-A-402.973
(3) IEEE ICASSP 80, vol. 1, 327-331, April 9-11, 1980 M.A. Krasner "The critical band coder ... Digital encoding of speech signals based on the perceptual requirements of the auditory system".
(4) EP-A-497 413
(5) EP-A-400.755
(6a) EP-A-457 390
(6b) EP-A-457 391
(7) EP-A-150.081

## Claims

1. A transmitter for a digital transmission system for transmitting a wideband signal *via* a transmission medium, which signal is sampled at a given sampling frequency Fₛ, for example a digital audio signal, which transmitter comprises
- an input terminal (1) for receiving the wideband signal,
- signal splitting means (2) for generating, in response to the wideband signal, a plurality of M narrow-band sub-signals at a decreased sampling frequency, for which purpose the splitting means split up the wideband signal into consecutive sub-bands having band numbers m which increase with the frequency, in which m complies with 1 ≤ m ≤ M, a sub-signal being composed of consecutive signal blocks, each signal block comprising q samples,
- bit allocation means (2',6,7) for generating bit allocation information indicating the quantity of bits by which the q samples of a signal block are represented in a sub-band, and for applying the bit allocation information to
- quantizing means (Q₁, ... Q_{M}) coupled to the signal splitting means (2) and being adapted to quantize the M sub-signals in blocks in response to the bit allocation information of the bit allocation means,
- means (14) for accommodating the quantized sub-signals and the bit allocation information in a frame of a second digital signal which is composed of consecutive frames,
- coding means (15) for converting the second digital signal into a third digital signal so that it is suitable to be transmitted *via* the transmission medium, and
- means (16) for applying the third digital signal to the transmission medium,
characterized in that the transmitter further comprises
- signal processing means (20) having an input coupled to the input terminal (1), an output and a control signal input (21),
- second signal splitting means (2') having an input coupled to the output of the signal processing means (20) for generating in response to the processed digital signal from the processing means, a plurality of M sub signals at a decreased sampling frequency, for which purpose the second splitting means split up the processed wideband signal into consecutive sub-bands having band numbers m which increase with frequency, in that the bit allocation means (6,7) are coupled to the output of the second splitting means (2') for deriving the bit allocation information from the sub signals, and in that the signal processing means (20) are adapted to process the wideband signal in dependence upon a signal processing control signal which is applied to the control signal input (21) of the signal processing means (20).

2. A transmitter for a digital transmission system for transmitting a wideband signal *via* a transmission medium, which signal is sampled at a given sampling frequency Fₛ, for example a digital audio signal, which transmitter comprises
- an input terminal (1) for receiving the wideband signal,
- signal splitting means (2) for generating, in response to the wideband signal, a plurality of M narrow-band sub-signals at a decreased sampling frequency, for which purpose the splitting means split up the wideband signal into consecutive sub-bands having band numbers m which increase with the frequency, in which m complies with 1 ≤ m ≤ M, a sub-signal being composed of consecutive signal blocks, each signal block comprising q samples.
- bit allocation means (2,6,7) for generating bit allocation information indicating the quantity of bits by which the q samples of a signal block are represented in a sub-band, and for applying the bit allocation information to
- quantizing means (Q₁,...,Q_{M}) coupled to the signal splitting means (2) and being adapted to quantize the M sub-signals in blocks in response to the bit allocation information of the bit allocation means,
- means (14) for accommodating the quantized sub-signals and the bit allocation information in a frame of a second digital signal which is composed of consecutive frames,
- coding means (15) for converting the second digital signal into a third digital signal so that it is suitable to be transmitted *via* the transmission medium, and
- means (16) for applying the third digital signal to the transmission medium,
characterized in that the transmitter further comprises
- correction means (45) coupled to the bit allocation means (2,6,7) and to the quantizing means, which correction means have a control signal input (21), said correction means being adapted to correct the bit allocation information of the bit allocation means in dependence upon a signal processing control signal which is applied to the control signal input (21) of the correction means (45) and for applying the corrected bit allocation information to the quantizing means.

3. A transmitter as claimed in Claim 1 or 2, characterized in that the transmitter further comprises means (13, 14) for applying the signal processing control signal to the transmission medium.

4. A transmitter as claimed in Claim 1, 2 or 3, characterized in that the signal processing control signal is in relation to a signal processing operation performed on the wideband signal in such a way that a spatial acoustic effect is realised in the processed wideband signal.

5. A transmitter as claimed in any one of the preceding Claims, characterized in that the transmitter is in the form of a device for recording the third digital signal on a record carrier.

6. A transmitter as claimed in Claim 5, characterized in that the record carrier is a magnetic record carrier.

7. A receiver for receiving a wideband digital information signal transmitted via a transmission medium in the form of a transmission signal, the receiver comprising
- read means (30) for receiving the transmission signal from the transmission medium,
- decoding means (32) for converting the transmission signal into a decoded transmission signal,
- deriving means (35) for deriving quantized sub signals and bit allocation information from frames included in the decoded transmission signal,
- synthesis filter means (36) for constructing, in response to quantized sub-signals, a replica of the wideband signal, said synthesis filter means combining the sub-bands at an increased sampling frequency to the signal band of the wideband information signal,
- an output terminal (40) for supplying an output signal,
characterized in that the deriving means (35) is further adapted to derive a signal processing control signal from the information received from the transmission medium, in that the receiver further comprises signal processing means (55) for performing a signal processing operation on the signal applied to its input (56) so as to generate an output signal at the output terminal (40) which is a processed version of said wideband digital information signal, said signal processing means having a control signal input (57) which is coupled to an output (60) of the deriving means (35), and in that the signal processing means (55) are adapted to perform the signal processing operation in dependence upon the signal processing control signal applied to the control signal input (57).

8. A receiver as claimed in Claim 7, characterized in that the signal processing means (55) are adapted to perform a signal processing operation in such a way that a spatial acoustic effect is realised in the processed wideband digital information signal.

9. A receiver as claimed in Claim 7 or 8, characterized in that the receiver is in the form of a device for reading the transmission signal from a record carrier.

10. A receiver as claimed in Claim 9, characterized in that the record carrier is a magnetic record carrier.

11. A receiver as claimed to Claim 7, 8, 9 or 10, characterized in that the receiver comprises a display (59) having a control signal input (58) which is coupled to the output (60) of the deriving means (35) and in that the display is adapted to indicate, in dependence upon the signal processing control signal presented at the control signal input, the type of spatial acoustic effect realised by the signal processing means.

12. An apparatus for encoding a wideband signal sampled at a given sampling frequency F_{S}, for example a digital audio signal, the apparatus comprising
- an input terminal (1) for receiving the wideband signal,
- signal splitting means (2) for generating, in response to the wideband signal, a plurality of M narrow-band sub-signals at a decreased sampling frequency, for which purpose the splitting means split up the wideband signal into consecutive sub-bands having band numbers m which increase with the frequency, in which m complies with 1 ≤ m ≤ M, a sub-signal being composed of consecutive signal blocks, each signal block comprising q samples,
- bit allocation means (2',6,7) for generating bit allocation information indicating the quantity of bits by which the q samples of a signal block are represented in a sub-band, and for applying the bit allocation information to
- quantizing means (Q₁, ... Q_{M}) coupled to the signal splitting means (2) and being adapted to quantize the M sub-signals in blocks in response to the bit allocation information of the bit allocation means, characterized in that the apparatus further comprises
- signal processing means (20) having an input coupled to the input terminal (1), an output and a control signal input (21),
- second signal splitting means (2') having an input coupled to the output of the signal processing means (20) for generating, in response to the processed digital signal from the processing means, a plurality of M sub signals at a decreased sampling frequency, for which purpose the second splitting means split up the processed wideband signal into consecutive sub-bands having band numbers m which increase with frequency, in that the bit allocation means (6,7) are coupled to the output of the second splitting means (2') for deriving the bit allocation information from the sub signals in that the signal processing means (20) are adapted to process the wideband signal in dependence upon a signal processing control signal which is applied to the control signal input (21) of the signal processing means (20).

13. An apparatus for encoding a wideband signal sampled at a given sampling frequency F_{S}, for example a digital audio signal, the apparatus comprising
- an input terminal (1) for receiving the wideband signal,
- signal splitting means (2) for generating, in response to the wideband signal, a plurality of M narrow-band sub-signals at a decreased sampling frequency, for which purpose the splitting means split up the wideband signal into consecutive sub-bands having band numbers m which increase with the frequency, in which m complies with 1 ≤ m ≤ M, a sub-signal being composed of consecutive signal blocks, each signal block comprising q samples,
- bit allocation means (2,6,7) for generating bit allocation information indicating the quantity of bits by which the q samples of a signal block are represented in a sub-band, and for applying the bit allocation information to
- quantizing means (Q₁,...,Q_{M}) coupled to the signal splitting means (2) and being adapted to quantize the M sub-signals in blocks in response to the bit allocation information of the bit allocation means,
characterized in that the apparatus further comprises
- correction means (45) coupled to the bit allocation means (2,6,7) and to the quantizing means, which correction means have a control signal input (21), said correction means being adapted to correct the bit allocation information of the bit allocation means in dependence upon a signal processing control signal which is applied to the control signal input (21) of the correction means (45) and for applying the corrected bit allocation information to the quantizing means.

14. An apparatus for decoding an wideband digital information signal encoded into an encoded information signal, the apparatus comprising
- deriving means (35) for deriving quantized sub signals and bit allocation information from frames included in the encoded information signal,
- synthesis filter means (36) for constructing, in response to quantized sub-signals, a replica of the wideband signal, said synthesis filter means combining the sub-bands at an increased sampling frequency to the signal band of the wideband information signal,
- an output terminal (40) for supplying an output signal,
characterized in that the deriving means is further adapted to derive a signal processing control signal from the encoded information signal, in that the apparatus further comprises signal processing means (55) for performing a signal processing operation on the signal applied to its input so as to generate an output signal at the output terminal (40) which is a processed version of the said wideband digital information signal, said signal processing means having a control signal input (57) which is coupled to an output (60) of the deriving means (35), and in that the signal processing means (55) are adapted to perform the signal processing operation in dependence upon the signal processing control signal applied to the control signal input (57).

15. A method of transmitting a wideband signal *via* a transmission medium, which signal is sampled at a given sampling frequency Fₛ, for example a digital audio signal, the method comprising the steps of
- receiving the wideband signal,
- generating, in response to the wideband signal, a plurality of M narrow-band sub-signals at a decreased sampling frequency, by splitting up the wideband signal into consecutive sub-bands having band numbers m which increase with the frequency, in which m complies with 1 ≤ m ≤ M, a sub-signal being composed of consecutive signal blocks, each signal block comprising q samples,
- generating bit allocation information indicating the quantity of bits by which the q samples of a signal block are represented in a sub-band,
- quantizing the M sub-signals in blocks in response to the bit allocation information,
- accommodating the quantized sub-signals and the bit allocation information in a frame of a second digital signal which is composed of consecutive frames,
- converting the second digital signal into a third digital signal so that it is suitable to be transmitted *via* the transmission medium, and
- applying the third digital signal to the transmission medium,
characterized in that the method further comprises the steps of
- applying a signal processing control signal,
- signal processing the wideband signal in dependence upon the signal processing control signal,
- generating, in response to the processed wideband signal, a plurality of M narrow-band sub-signals at a decreased sampling frequency, by splitting up the processed wideband signal into consecutive sub-bands having band numbers m which increase with the frequency, and
- deriving the bit allocation information from the split up processed wideband signal.

16. A method of transmitting a wideband signal *via* a transmission medium, which signal is sampled at a given sampling frequency Fₛ, for example a digital audio signal, the method comprising the steps of
- receiving the wideband signal,
- generating, in response to the wideband signal, a plurality of M narrow-band sub-signals at a decreased sampling frequency, by splitting up the wideband signal into consecutive sub-bands having band numbers m which increase with the frequency, in which m complies with 1 ≤ m ≤ M, a sub-signal being composed of consecutive signal blocks, each signal block comprising q samples.
- generating bit allocation information indicating the quantity of bits by which the q samples of a signal block are represented in a sub-band,
- quantizing the M sub-signals in blocks in response to bit allocation information,
- accommodating the quantized sub-signals and bit allocation information in a frame of a second digital signal which is composed of consecutive frames,
- converting the second digital signal into a third digital signal so that it is suitable to be transmitted *via* the transmission medium, and
- applying the third digital signal to the transmission medium,
characterized in that the method further comprises the steps of
- applying a signal processing control signal,
- correcting the bit allocation information derived in the bit allocation generation step in dependence upon the signal processing control signal
- quantizing the sub-signals in response to the corrected bit allocation information.

## Patentansprüche

1. Sender für ein digitales Übertragungssystem zur Übertragung eines Breitbandsignals über ein Übertragungsmedium, wobei dieses Signal mit einer bestimmten Abtastfrequenz Fₛ abgetastet wird, beispielsweise ein digitales Signal, wobei dieser Sender die nachfolgenden Elemente umfasst:
- eine Eingangsklemme (1) zum Empfangen des Breitbandsignals,
- Signalspaltmittel (2) zum in Reaktion auf das Breitbandsignal Erzeugen einer Anzahl von M Schmalbandteilsignalen mit einer verringerten Abtastfrequenz, wozu die Spaltmittel das Breitbandsignal in aufeinanderfolgende Teilbänder mit Bandnummern m aufteilen, die mit der Frequenz zunehmen, wobei m der nachfolgenden Gleichung entspricht: 1 ≤ m ≤ M, wobei ein Teilsignal aus aufeinanderfolgenden Signalblöcken besteht, wobei jeder Signalblock q Abtastwerte aufweist,
- Bit-Zuordnungemittel (2', 6, 7) zum Erzeugen von Bit-Zuordnungsinformation, welche die Menge an Bits angibt, durch die q Abtastwerte eines Signalblocks in einem Teilband dargestellt werden, und zum Zuführen der Bit-Zuordnungsinformation zu
- Quantisierungsmitteln (Q₁, ..... Q_{M}), die mit den Signalspaltmitteln (2) gekoppelt sind und dazu vorgesehen sind, in Reaktion auf die Bit-Zuordnungsinformation der Bit-Zuordnungsmittel die M Teilsignale in Blöcken zu Quantisieren,
- Mittel (14) zum Unterbringen der quantisierten Teilsignale und der Bit-Zuordnungsinformation in einem Frame eines zweiten digitalen Signals, das aus aufeinanderfolgenden Frames gebildet ist,
- Codierungsmittel (15) zum Umwandeln des zweiten digitalen Signals in ein drittes digitales Signal, so dass es geeignet ist um über das Übertragungsmedium übertragen zu werden, und
- Mittel (16) zum Zuführen des dritten digitalen Signals zu dem Übertragungsmedium, dadurch gekennzeichnet, dass der Sender weiterhin die nachfolgenden Elemente umfasst:
- Signalverarbeitungsmittel (20) mit einem mit der Eingangsklemme (1) gekoppelten Eingang, mit einem Ausgang und mit einem Steuersignaleingang (21),
- zweite Signalspaltmittel (2'), deren Eingang mit dem Ausgang der Signalverarbeitungsmittel (20) gekoppelt ist zum in Reaktion auf das verarbeitete digitale Signal der Signalverarbeitungsmittel Erzeugen einer Anzahl von M Teilsignalen mit einer verringerten Abtastfrequenz, wozu die zweiten Spaltmittel das verarbeitete Breitbandsignal in aufeinanderfolgende Teilbänder mit Bandnummern m aufteilen, die mit der Frequenz zunehmen, dass die Bitzuordnungsmittel (6,7) mit dem Ausgang der zweiten Spaltmittel (2') gekoppelt sind zum Herleiten der Bitzuordnungsinformation aus den Teilsignalen, und dass die Signalverarbeitungsmittel (20) das Breitbandsignal in Abhängigkeit von einem Signalverarbeitungssteuersignal verarbeiten, das dem Steuersignaleingang (21) der Signalverarbeitungsmittel (20) zugeführt wird.

2. Sender für ein digitales Übertragungssystem zur Übertragung eines Breitbandsignals über ein Übertragungsmedium, wobei dieses Signal mit einer bestimmten Abtastfrequenz Fₛ abgetastet wird, beispielsweise ein digitales Audiosignal, wobei dieser Sender die nachfolgenden Elemente umfasst:
- eine Eingangsklemme (1) zum Empfangen des Breitbandsignals,
- Signalspaltmittel (2) zum in Reaktion auf das Breitbandsignal Erzeugen einer Anzahl von M Schmalbandteilsignalen mit einer verringerten Abtastfrequenz, wozu die Spaltmittel das Breitbandsignal in aufeinanderfolgende Teilbänder mit Bandnummern m aufteilen, die mit der Frequenz zunehmen, wobei m der nachfolgenden Gleichung entspricht: 1 ≤ m ≤ M, wobei ein Teilsignal aus aufeinanderfolgenden Signalblöcken besteht, wobei jeder Signalblock q Abtastwerte aufweist,
- Bit-Zuordnungemittel (2, 6, 7) zum Erzeugen von Bit-Zuordnungsinformation, welche die Menge an Bits angibt, durch die q Abtastwerte eines Signalblocks in einem Teilband dargestellt werden, und zum Zuführen der Bit-Zuordnungsinformation zu
- Quantisierungsmitteln (Q₁, ..... Q_{M}), die mit den Signalspaltmitteln (2) gekoppelt sind und dazu vorgesehen sind, in Reaktion auf die Bit-Zuordnungsinformation der Bit-Zuordnungsmittel die M Teilsignale in Blöcken zu Quantisieren,
- Mittel (14) zum Unterbringen der quantisierten Teilsignale und der Bit-Zuordnungsinformation in einem Frame eines zweiten digitalen Signals, das aus aufeinanderfolgenden Frames gebildet ist,
- Codierungsmittel (15) zum Umwandeln des zweiten digitalen Signals in ein drittes digitales Signal, so dass es geeignet ist um über das Übertragungsmedium übertragen zu werden, und
- Mittel (16) zum Zuführen des dritten digitalen Signals zu dem Übertragungsmedium, dadurch gekennzeichnet, dass der Sender weiterhin die nachfolgenden Elemente umfasst:
- Korrekturmittel (45), die mit den Bitzuordnungsmitteln (2,6,7) und mit den Quantisierungsmitteln gekoppelt sind, wobei diese Korrekturmittel einen Steuersignaleingang (21) haben, wobei die genannten Korrekturmittel in Abhängigkeit von einem dem Steuersignaleingang (21) der Korrekturmittel (45) zugeführten Signalverarbeitungssteuersignal die Bitzuordnungsinformation der Bitzuordnungsmittel korrgieren und die korrigierte Bitzuordnungsinformation den Quantisierungsmitteln zuführen.

3. Sender nach Anspruch 1 oder 2, dadurch gekennzeichnet, dass der Sender weiterhin Mittel (13, 14) aufweist zum Zuführen des Signalverarbeitungssteuersignals zu dem Übertragungsmedium.

4. Sender nach Anspruch 1, 2 oder 3, dadurch gekennzeichnet, dass das Signalverarbeitungssteuersignal in einem Verhältnis zu einem Signalverarbeitungsvorgang steht, der an dem Breitbandsignal durchgeführt wird, und zwar derart, dass in dem verarbeiteten Breitbandsignal ein Spezialeffekt verwirklicht wird.

5. Sender nach einem der vorstehenden Ansprüche, dadurch gekennzeichnet, dass der Sender in Form einer Anordnung zum Aufzeichnen des dritten digitalen Signals auf einem Aufzeichnungsträger ist.

6. Sender nach Anspruch 5, dadurch gekennzeichnet, dass der Aufzeichnungsträger ein magnetischer Aufzeichnungsträger ist.

7. Empfänger zum Empfangen eines digitalen Breitbandinformationssignals, das über ein Übertragungsmedium in Form eines Übertragungssignals übertragen wird, wobei dieser Empfänger die nachfolgenden Elemente umfasst:
- Auslesemittel (30) zum Empfangen des Übertragungssignals von dem Übertragungsmedium,
- Decodermittel (32) zur Umwandlung des Übertragungssignals in ein decodiertes Übertragungssignal,
- Herleitungsmittel (3 5) zum herleiten quantisierter Teilsignale und Bitzuordnungsinformation aus Frames in dem decodierten Übertragungssignal,
- Synthesefiltermittel (36) zum in Reaktion auf quantisierte Teilsignale Konstruieren einer Replik des Breitbandsignals, wobei diese Synthesefiltermittel die Teilbänder mit einer zugenommenen Abtastfrequenz zu dem Signalband des Breitbandinformationssignals kombinieren,
- eine Ausgangsklemme (40) zum Liefern eines Ausgangssignals,
dadurch gekennzeichnet, dass die Herleitungsmittel (35) weiterhin ein Signalverarbeitungssteuersignal aus der von dem Übertragungsmedium empfangenen Information herleiten, dass der Empfänger weiterhin Signalverarbeitungsmittel (55) aufweist zum Durchführen eines Signalverarbeitungsvorgangs an dem dem Eingang (56) zugeführten Signal zum Erzeugen eines Ausgangssignals an der Ausgangsklemme (40), wobei es sich um eine verarbeitete Version des genannten digitalen Breitbandinformationssignals handelt, wobei diese Signalverarbeitungsmittel einen Steuersignaleingang (57) haben, der mit einem Ausgang (60) der Herleitungsmittel (35) gekoppelt ist, und dass die Signalverarbeitungsmittel (55) den Signalverarbeitungsvorgang durchführen in Abhängigkeit von dem dem Steuersignaleingang (57) zugeführten Signalverarbeitungssteuersignal.

8. Empfänger nach Anspruch 7, dadurch gekennzeichnet, dass die Signalverarbeitungsmittel (55) einen Signalverarbeitungsvorgang durchführen, und zwar derart, dass in dem verarbeiteten digitalen Breitbandinformationssignal ein raumakustischer Effekt verwirklicht wird.

9. Empfänger nach Anspruch 7 oder 8, dadurch gekennzeichnet, dass der Empfänger in Form einer Anordnung zum Auslesen des Übertragungssignals von einem Aufzeichnungsträger ist.

10. Empfänger nach Anspruch 9, dadurch gekennzeichnet, dass der Aufzeichnungsträger ein magnetischer Aufzeichnungsträger ist.

11. Empfänger nach Anspruch 7, 8, 9 oder 10, dadurch gekennzeichnet, dass der Empfänger eine Wiedergabeanordnung (59) mit einem Steuersignaleingang (58) aufweist, der mit dem Ausgang (60) der Herleitungsmittel (35) gekoppelt ist, und dass die Wiedergabeanordnung, je nach dem an dem Steuersignaleingang angebotenen Signalverarbeitungssteuersignal, die Art des von den Signalverarbeitungsmitteln verwirklicheten raumakustischen Effektes angibt.

12. Anordnung zur Codierung eines mit einer bestimmten Abtastfrequenz Fₛ abgetasteten Breitbandsignals, beispielsweise eines digitalen Audiosignals, wobei diese Anordnung die nachfolgenden Elemente aufweist:
- eine Eingangsklemme (1) zum Empfangen des Breitbandsignals,
- Signalspaltmittel (2) zum in Reaktion auf das Breitbandsignal Erzeugen einer Anzahl von M Schmalbandteilsignalen mit einer verringerten Abtastfrequenz, wozu die Spaltmittel das Breitbandsignal in aufeinanderfolgende Teilbänder mit Bandnummern m aufteilen, die mit der Frequenz zunehmen, wobei m der nachfolgenden Gleichung entspricht: 1 ≤ m ≤ M, wobei ein Teilsignal aus aufeinanderfolgenden Signalblöcken besteht, wobei jeder Signalblock q Abtastwerte aufweist,
- Bit-Zuordnungsmittel (2', 6, 7) zum Erzeugen von Bit-Zuordnungsinformation, welche die Menge an Bits angibt, durch die q Abtastwerte eines Signalblocks in einem Teilband dargestellt werden, und zum Zuführen der Bit-Zuordnungsinformation zu
- Quantisierungsmitteln (Q₁, ..... Q_{M}), die mit den Signalspaltmitteln (2) gekoppelt sind und dazu vorgesehen sind, in Reaktion auf die Bit-Zuordnungsinformation der Bit-Zuordnungsmittel die M Teilsignale in Blöcken zu Quantisieren, dadurch gekennzeichnet, dass die Anordnung weiterhin die nachfolgenden Elemente umfasst:
- Signalverarbeitungsmittel (20) mit einem mit der Eingangsklemme (1) gekoppelten Eingang, mit einem Ausgang und mit einem Steuersignaleingang (21),
- zweite Signalspaltmittel (2'), deren Eingang mit dem Ausgang der Signalverarbeitungsmittel (20) gekoppelt ist zum in Reaktion auf das verarbeitete digitale Signal der Signalverarbeitungsmittel Erzeugen einer Anzahl von M Teilsignalen mit einer verringerten Abtastfrequenz, wozu die zweiten Spaltmittel das verarbeitete Breitbandsignal in aufeinanderfolgende Teilbänder mit Bandnummern m aufteilen, die mit der Frequenz zunehmen, dass die Bitzuordnungsmittel (6,7) mit dem Ausgang der zweiten Spaltmittel (2') gekoppelt sind zum Herleiten der Bitzuordnungsinformation aus den Teilsignalen, und dass die Signalverarbeitungsmittel (20) das Breitbandsignal in Abhängigkeit von einem Signalverarbeitungssteuersignal verarbeiten, das dem Steuersignaleingang (21) der Signalverarbeitungsmittel (20) zugeführt wird.

13. Anordnung zum Codieren eines mit einer bestimmten Abtastfrequenz Fₛ, beispielsweise eines digitalen Audiosignals, abgetasteten Breitbandsignals, wobei diese Anordnung die nachfolgenden Elemente aufweist:
- eine Eingangsklemme (1) zum Empfangen des Breitbandsignals,
- Signalspaltmittel (2) zum in Reaktion auf das Breitbandsignal Erzeugen einer Anzahl von M Schmalbandteilsignalen mit einer verringerten Abtastfrequenz, wozu die Spaltmittel das Breitbandsignal in aufeinanderfolgende Teilbänder mit Bandnummern m aufteilen, die mit der Frequenz zunehmen, wobei m der nachfolgenden Gleichung entspricht: 1 ≤ m ≤ M, wobei ein Teilsignal aus aufeinanderfolgenden Signalblöcken besteht, wobei jeder Signalblock q Abtastwerte aufweist,
- Bit-Zuordnungsmittel (2, 6, 7) zum Erzeugen von Bit-Zuordnungsinformation, welche die Menge an Bits angibt, durch die q Abtastwerte eines Signalblocks in einem Teilband dargestellt werden, und zum Zuführen der Bit-Zuordnungsinformation zu
- Quantisierungsmitteln (Q₁, ..... Q_{M}), die mit den Signalspaltmitteln (2) gekoppelt sind und dazu vorgesehen sind, in Reaktion auf die Bit-Zuordnungsinformation der Bit-Zuordnungsmittel die M Teilsignale in Blöcken zu Quantisieren, dadurch gekennzeichnet, dass die Anordnung weiterhin die nachfolgenden Elemente umfasst:
- Korrekturmittel (45), die mit den Bitzuordnungsmitteln (2,6,7) sowie mit den Quantisierungsmitteln gekoppelt sind, wobei diese Korrekturmittel einen Steuersignaleingang (21) haben und dazu vorgesehen sind, die Bitzuordnungsinformation der Bitzuordnungsmittel zu korrigieren, und zwar abhängig von einem Signalverarbeitungssteuersignals, das dem Steuersignaleingang (21) der Korrekturmittel (45) zugeführt wird und zum Zuführen der korrigierten Bitzuordnungsinformation zu den Quantisierungsmitteln.

14. Anordnung zum Decodieren eines digitalen Breitbandinformationssignals, das in ein codiertes Informationssignal codiert ist, wobei diese Anordnung dienachfolgenden Elemente aufweist:
- Mittel (35) zum Herleiten quantisierter Teilsignale und Bitzuordnungsinformation aus Frames in dem codierten Informationssignal,
- Synthesefiltermittel (36) zum in Reaktion auf die quantisierten Teilsignale Zusammensetzen einer Replik des Breitbandsignals, wobei die genannten Synthesefiltermittel die Teilbänder mit einer erhöhten Abtastfrequenz zu dem Signalband des Breitbandinformationssignals kombinieren,
- eine Ausgangsklemme (40) zum Liefern eines Ausgangssignals,
dadurch gekennzeichnet, dass die herleitenden Mittel weiterhin dazu vorgesehen sind, aus dem codierten Informationssignal ein Signalverarbeitungssteuersignal herzuleiten, dass die Anordnung weiterhin Signalverarbeitungsmittel (55) aufweist zum Durchführen einer Signalverarbeitung an dem dem Eingang zugeführten Signal zum Erzeugen eines Ausgangssignals an der Ausgangsklemme (40), das eine verarbeitete Version des genannten digitalen Breitbandinformationssignals ist, wobei die gennanten Signalverarbeitungsmittel einen Steuersignaleingang (57) haben, der mit einem Ausgang (60) der Herleitungsmittel (35) gekoppelt ist, und dass die Signalverarbeitungsmittel (55) in Abhängigkeit von dem dem Steuersignaleingang (57) zugeführten Signalverarbeitungssteuersignal die Signalverarbeitung durchführen.

15. Verfahren zur Übertragung eines Breitbandsignals über ein Übertragungsmedium, wobei dieses Signal mit einer bestimmten Abtastfrequenz Fₛ abgetastet wird, beispielsweise eines digitalen Audiosignals, wobei dieses Verfahren die nachfolgenden Verfahrensschritte umfasst:
- das Empfangen des Breitbandsignals,
- das Erzeugen, in Reaktion auf das Breitbandsignal, einer Anzahl von M Schmalbandteilsignalen mit einer verringerten Abtastfrequenz, durch Aufspaltung des Breitbandsignals in aufeinanderfolgende Teilbänder mit Bandnummern m, die mit der Frequenz zunehmen, wobei m der nachfolgenden Gleichung entspricht: 1 ≤ m ≤ M, wobei ein Teilsignal aus aufeinanderfolgenden Signalblöcken besteht, wobei jeder Signalblock q Abtastwerte aufweist,
- das Erzeugen von Bit-Zuordnungsinformation, welche die Menge an Bits angibt, durch die q Abtastwerte eines Signalblocks in einem Teilband dargestellt werden,
- das Quantisieren von M Teilsignalen in Blöcken in Reaktion auf die Bitzuordnungsinformation,
- das Unterbringen der quantisierten Teilsignale und der Bitzuordnungsinformation in einem Frame eines zweiten digitalen Signals, das aus aufeinanderfolgenden Frames besteht,
- das Umwandeln des zweiten digitalen Signals in ein drittes digitales Signal, so dass es geeignet ist, über das Übertragungsmedium übertragen zu werden, und
- das Zuführen des dritten digitalen Signals zu dem Übertragungsmedium, dadurch gekennzeichnet, dass das Verfahren weiterhin die nachfolgenden Verfahrensschritte umfasst:
- das Zuführen eines Signalverarbeitungssteuersignals,
- das Verarbeiten des Breitbandsignals in Abhängigkeit von dem Signalverarbeitungssteuersignal,
- das, in Reaktion auf das verarbeitete Breitbandsignal, Erzeugen einer Anzahl von M Schmalbandteilsignalen mit einer abgenommenen Abtastfrequenz durch Aufteilung des verarbeiteten Breitbandsignals in aufeinanderfolgende Teilbänder mit Bandnummern m, die mit der Frequenz zunehmen, und
- das Herleiten der Bitzuordnungsinformation aus dem aufgeteilten, verarbeiteten Breitbandsignal.

16. Verfahren zur Übertragung eines Breitbandsignals über ein Übertragungsmedium, wobei dieses Signal mit einer bestimmten Abtastfrequenz Fₛ abgetastet wird, beispielsweise eines digitalen Audiosignals, wobei dieses Verfahren die nachfolgenden Verfahrensschritte umfasst:
- das Empfangen des Breitbandsignals,
- das, in Reaktion auf das Breitbandsignal, Erzeugen einer Anzahl von M Schmalbandteilsignalen mit einer verringerten Abtastfrequenz, durch Aufspaltung des Breitbandsignals in aufeinanderfolgende Teilbänder mit Bandnummern m, die mit der Frequenz zunehmen, wobei m der nachfolgenden Gleichung entspricht: 1 ≤ m ≤ M, wobei ein Teilsignal aus aufeinanderfolgenden Signalblöcken besteht, wobei jeder Signalblock q Abtastwerte aufweist,
- das Erzeugen von Bit-Zuordnungsinformation, welche die Menge an Bits angibt, durch die q Abtastwerte eines Signalblocks in einem Teilband dargestellt werden,
- das Quantisieren von M Teilsignalen in Blöcken in Reaktion auf die Bitzuordnungsinformation,
- das Unterbringen der quantisierten Teilsignale und der Bitzuordnungsinformation in einem Frame eines zweiten digitalen Signals, das aus aufeinanderfolgenden Frames besteht,
- das Umwandeln des zweiten digitalen Signals in ein drittes digitales Signal, so dass es geeignet ist, über das Übertragungsmedium übertragen zu werden, und
- das Zuführen des dritten digitalen Signals zu dem Übertragungsmedium, dadurch gekennzeichnet, dass das Verfahren weiterhin die nachfolgenden Verfahrensschritte umfasst:
- das Zuführen eines Signalverarbeitungssteuersignals,
- das Korrigieren der in dem Bitzuordnungserzeugungsschritt hergeleiteten Bitzuordnungsinformation in Abhängigkeit von dem Signalverarbeitungssteuersignal,
- das Quantisieren der Teilsignale in Reaktion auf die korrigierte Bitzuordnungsinformation.

## Revendications

1. Emetteur pour un système de transmission numérique pour transmettre un signal à large bande par l'intermédiaire d'un support de transmission, lequel signal est échantillonné à une fréquence d'échantillonnage donnée Fₛ, par exemple un signal audio numérique, lequel émetteur comprend :
- une borne d'entrée (1) pour recevoir le signal à large bande ;
- des moyens de division de signal (2) pour produire, en réaction au signal à large bande, une pluralité de M sous-signaux à bande étroite à une fréquence d'échantillonnage diminuée, auxquelles fins les moyens de division divisent le signal à large bande en sous-bandes consécutives de numéros de bande m qui augmentent avec la fréquence, dans lesquels m se conforme à 1 ≤ m ≤ M, un sous-signal étant composé de blocs de signaux consécutifs, chaque bloc de signaux comprenant q échantillons ;
- des moyens d'attribution de bits (2', 6, 7) pour produire des informations d'attribution de bits indiquant la quantité de bits par laquelle les q échantillons d'un bloc de signaux sont représentés dans une sous-bande, et pour appliquer les informations d'attribution de bits à des
- moyens de quantification (Q₁, ..., Q_{M}) couplés aux moyens de division de signal (2) et propres à quantifier les M sous-signaux en blocs en réaction aux informations d'attribution de bits des moyens d'attribution de bits ;
- des moyens (14) pour loger les sous-signaux quantifiés et les informations d'attribution de bits dans une trame d'un deuxième signal numérique qui est composé de trames consécutives ;
- des moyens de codage (15) pour convertir le deuxième signal numérique en un troisième signal numérique de sorte qu'il soit approprié à une transmission par l'intermédiaire du support de transmission, et
- des moyens (16) pour appliquer le troisième signal numérique au support de transmission, caractérisé en ce que l'émetteur comprend en outre :
- des moyens de traitement de signaux (20) comportant une entrée couplée à la borne d'entrée (1), une sortie et une entrée de signal de commande (21) ;
- des deuxièmes moyens de division de signal (2') comportant une entrée couplée à la sortie des moyens de traitement de signaux (20) pour produire, en réaction au signal numérique traité à partir des moyens de traitement de signaux, une pluralité de M sous-signaux à une fréquence d'échantillonnage diminuée, auxquelles fins les deuxièmes moyens de division divisent le signal à large bande traité en sous-bandes consécutives de numéros de bande m qui augmentent avec la fréquence, en ce que les moyens d'attribution de bits (6,7) sont couplés à la sortie des deuxièmes moyens de division (2') pour dériver les informations d'attribution de bits des sous-signaux, et en ce que les moyens de traitement de signaux (20) sont propres à traiter le signal à large bande en fonction d'un signal de commande de traitement de signaux qui est appliqué à l'entrée de signal de commande (21) des moyens de traitement de signaux (20).

2. Emetteur pour un système de transmission numérique pour transmettre un signal à large bande par l'intermédiaire d'un support de transmission, lequel signal est échantillonné à une fréquence d'échantillonnage donnée Fₛ, par exemple un signal audio numérique, lequel émetteur comprend :
- une borne d'entrée (1) pour recevoir le signal à large bande ;
- des moyens de division de signal (2) pour produire, en réaction au signal à large bande, une pluralité de M sous-signaux à bande étroite à une fréquence d'échantillonnage diminuée, auxquelles fins les moyens de division divisent le signal à large bande en sous-bandes consécutives de numéros de bande m qui augmentent avec la fréquence, dans lesquels m se conforme à 1 ≤ m ≤ M, un sous-signal étant composé de blocs de signaux consécutifs, chaque bloc de signaux comprenant q échantillons ;
- des moyens d'attribution de bits (2, 6, 7) pour produire des informations d'attribution de bits indiquant la quantité de bits par laquelle les q échantillons d'un bloc de signaux sont représentés dans une sous-bande, et pour appliquer les informations d'attribution de bits à des
- moyens de quantification (Q₁, ..., Q_{M}) couplés aux moyens de division de signal (2) et propres à quantifier les M sous-signaux en blocs en réaction aux informations d'attribution de bits des moyens d'attribution de bits ;
- des moyens (14) pour loger les sous-signaux quantifiés et les informations d'attribution de bits dans une trame d'un deuxième signal numérique qui est composé de trames consécutives ;
- des moyens de codage (15) pour convertir le deuxième signal numérique en un troisième signal numérique de sorte qu'il soit approprié à une transmission par l'intermédiaire du support de transmission, et
- des moyens (16) pour appliquer le troisième signal numérique au support de transmission, caractérisé en ce que l'émetteur comprend en outre :
- des moyens de correction (45) couplés aux moyens d'attribution de bits (2, 6, 7) et aux moyens de quantification, lesquels moyens de correction présentent une entrée de signal de commande (21), lesdits moyens de correction étant propres à corriger les informations d'attribution de bits des moyens d'attribution de bits en fonction d'un signal de commande de traitement de signaux qui est appliqué à l'entrée de signal de commande (21) des moyens de correction (45) et à appliquer les informations d'attribution de bits corrigées aux moyens de quantification.

3. Emetteur suivant la revendication 1 ou 2, caractérisé en ce que l'émetteur comprend en outre des moyens (13, 14) pour appliquer le signal de commande de traitement de signaux au support de transmission.

4. Emetteur suivant la revendication 1, 2 ou 3, caractérisé en ce que le signal de commande de traitement de signaux est lié à l'opération de traitement de signaux réalisée sur le signal à large bande d'une manière telle qu'un effet acoustique spatial est réalisé dans le signal à large bande traité.

5. Emetteur suivant l'une quelconque des revendications précédentes, caractérisé en ce que l'émetteur se présente sous la forme d'un dispositif pour enregistrer le troisième signal numérique sur un support d'enregistrement.

6. Emetteur suivant la revendication 5, caractérisé en ce que le support d'enregistrement est un support d'enregistrement magnétique.

7. Récepteur pour recevoir un signal d'information numérique à large bande transmis par l'intermédiaire d'un support de transmission sous la forme d'un signal de transmission, le récepteur comprenant :
- des moyens de lecture (30) pour recevoir le signal de transmission depuis le support de transmission ;
- des moyens de décodage (32) pour convertir le signal de transmission en un signal de transmission décodé ;
- des moyens de dérivation (35) pour dériver des sous-signaux quantifiés et des informations d'attribution de bits à partir de trames incluses dans le signal de transmission décodé;
- des moyens de filtre de synthèse (36) pour construire, en réaction aux sous-signaux quantifiés, une réplique du signal à large bande, lesdits moyens de filtre de synthèse combinant les sous-bandes à une fréquence d'échantillonnage augmentée à la bande de signal du signal d'information à large bande ;
- une borne de sortie (40) pour fournir un signal de sortie,
caractérisé en ce que les moyens de dérivation (35) sont en outre propres à dériver un signal de commande de traitement de signaux des informations reçues du support de transmission, en ce que le récepteur comprend en outre des moyens de traitement de signaux (55) pour réaliser une opération de traitement de signaux sur le signal appliqué à une entrée (56) afin de produire un signal de sortie à la borne de sortie (40) qui est une version traitée dudit signal d'information numérique à large bande, lesdits moyens de traitement de signaux comportant une entrée de signal de commande (57) qui est couplée à une sortie (60) des moyens de dérivation (35), et en ce que les moyens de traitement de signaux (55) sont propres à réaliser l'opération de traitement de signaux en fonction du signal de commande de traitement de signaux appliqué à l'entrée de signal de commande (57).

8. Récepteur suivant la revendication 7, caractérisé en ce que les moyens de traitement de signaux (55) sont propres à réaliser une opération de traitement de signaux de manière telle qu'un effet acoustique spatial est réalisé dans le signal d'information numérique à large bande traité.

9. Récepteur suivant la revendication 7 ou 8, caractérisé en ce que le récepteur se présente sous la forme d'un dispositif pour lire le signal de transmission depuis un support d'enregistrement.

10. Récepteur suivant la revendication 9, caractérisé en ce que le support d'enregistrement est un support d'enregistrement magnétique.

11. Récepteur suivant la revendication 7, 8, 9 ou 10, caractérisé en ce que le récepteur comprend un affichage (59) comportant une entrée de signal de commande (58) qui est couplée à la sortie (60) des moyens de dérivation (35) et en ce que l'affichage est propre à indiquer, en fonction du signal de commande de traitement de signaux présenté à l'entrée de signal de commande, le type d'effet acoustique spatial réalisé par les moyens de traitement de signaux.

12. Appareil pour coder un signal à large bande échantillonné à une fréquence d'échantillonnage donnée Fₛ, par exemple un signal audio numérique, l'appareil comprenant :
- une borne d'entrée (1) pour recevoir le signal à large bande ;
- des moyens de division de signal (2) pour produire, en réaction au signal à large bande, une pluralité de M sous-signaux à bande étroite à une fréquence d'échantillonnage diminuée, auxquelles fins les moyens de division divisent le signal à large bande en sous-bandes consécutives de numéros de bande m qui augmentent avec la fréquence, dans lesquels m se conforme à 1 ≤ m ≤ M, un sous-signal étant composé de blocs de signaux consécutifs, chaque bloc de signaux comprenant q échantillons ;
- des moyens d'attribution de bits (2', 6, 7) pour produire des informations d'attribution de bits indiquant la quantité de bits par laquelle les q échantillons d'un bloc de signaux sont représentés dans une sous-bande, et pour appliquer les informations d'attribution de bits à des
- moyens de quantification (Q₁, ..., Q_{M}) couplés aux moyens de division de signal (2) et propres à quantifier les M sous-signaux en blocs en réaction aux informations d'attribution de bits des moyens d'attribution de bits, caractérisé en ce que l'appareil comprend en outre :
- des moyens de traitement de signaux (20) comportant une entrée couplée à la borne d'entrée (1), une sortie et une entrée de signal de commande (21) ;
- des deuxièmes moyens de division de signal (2') comportant une entrée couplée à la sortie des moyens de traitement de signaux (20) pour produire, en réaction au signal numérique traité des moyens de traitement de signaux, une pluralité de M sous-signaux à une fréquence d'échantillonnage diminuée, auxquelles fins les deuxièmes moyens de division divisent le signal à large bande traité en sous-bandes consécutives de numéros de bandes m qui augmentent avec la fréquence, en ce que les moyens d'attribution de bits (6,7) sont couplés à la sortie des deuxièmes moyens de division (2') pour dériver les informations d'attribution de bits des sous-signaux, en ce que les moyens de traitement de signaux (20) sont propres à traiter le signal à large bande en fonction d'un signal de commande de traitement de signaux qui est appliqué à l'entrée de signal de commande (21) des moyens de traitement de signaux (20).

13. Appareil pour coder un signal à large bande échantillonné à une fréquence d'échantillonnage donnée Fₛ, par exemple un signal audio numérique, l'appareil comprenant :
- une borne d'entrée (1) pour recevoir le signal à large bande ;
- des moyens de division de signal (2) pour produire, en réaction au signal à large bande, une pluralité de M sous-signaux à bande étroite à une fréquence d'échantillonnage diminuée, auxquelles fins les moyens de division divisent le signal à large bande en sous-bandes consécutives de numéros de bande m qui augmentent avec la fréquence, dans lesquels m se conforme à 1 ≤ m ≤ M, un sous-signal étant composé de blocs de signaux consécutifs, chaque bloc de signaux comprenant q échantillons ;
- des moyens d'attribution de bits (2, 6, 7) pour produire des informations d'attribution de bits indiquant la quantité de bits par laquelle les q échantillons d'un bloc de signaux sont représentés dans une sous-bande, et pour appliquer les informations d'attribution de bits à des
- moyens de quantification (Q₁, ..., Q_{M}) couplés aux moyens de division de signal (2) et propres à quantifier les M sous-signaux en blocs en réaction aux informations d'attribution de bits des moyens d'attribution de bits,
caractérisé en ce que l'appareil comprend en outre :
- des moyens de correction (45) couplés aux moyens d'attribution de bits (2, 6, 7) et aux moyens de quantification, lesquels moyens de correction présentent une entrée de signal de commande (21), lesdits moyens de correction étant propres à corriger les informations d'attribution de bits des moyens d'attribution de bits en fonction d'un signal de commande de traitement de signaux qui est appliqué à l'entrée de signal de commande (21) des moyens de correction (45) et à appliquer les informations d'attribution de bits corrigées aux moyens de quantification.

14. Appareil pour décoder un signal d'information numérique à large bande codé en un signal d'information codé, l'appareil comprenant :
- des moyens de dérivation (35) pour dériver des sous-signaux quantifiés et des informations d'attribution de bits à partir de trames incluses dans le signal d'information codé;
- des moyens de filtre de synthèse (36) pour construire, en réaction aux sous-signaux quantifiés, une réplique du signal à large bande, lesdits moyens de filtre de synthèse combinant les sous-bandes à une fréquence d'échantillonnage augmentée à la bande de signal du signal d'information à large bande ;
- une borne de sortie (40) pour fournir un signal de sortie,
caractérisé en ce que les moyens de dérivation sont en outre propres à dériver un signal de commande de traitement de signaux du signal d'information codé, en ce que l'appareil comprend en outre des moyens de traitement de signaux (55) pour réaliser une opération de traitement de signaux sur le signal appliqué à une entrée afin de produire un signal de sortie à la borne de sortie (40) qui est une version traitée dudit signal d'information numérique à large bande, lesdits moyens de traitement de signaux comportant une entrée de signal de commande (57) qui est couplée à une sortie (60) des moyens de dérivation (35), et en ce que les moyens de traitement de signaux (55) sont propres à réaliser l'opération de traitement de signaux en fonction du signal de commande de traitement de signaux appliqué à l'entrée de signal de commande (57).

15. Procédé de transmission d'un signal à large bande par l'intermédiaire d'un support de transmission, lequel signal est échantillonné à une fréquence d'échantillonnage donnée Fₛ, par exemple un signal audio numérique, le procédé comprenant les étapes suivantes :
- recevoir le signal à large bande ;
- produire, en réaction au signal à large bande, une pluralité de M sous-signaux à bande étroite à une fréquence d'échantillonnage diminuée, en divisant le signal à large bande en sous-bandes consécutives de numéros de bande m qui augmentent avec la fréquence, dans lesquels m se conforme à 1 ≤ m ≤ M, un sous-signal étant composé de blocs de signaux consécutifs, chaque bloc de signaux comprenant q échantillons ;
- produire des informations d'attribution de bits indiquant la quantité de bits par laquelle les q échantillons d'un bloc de signaux sont représentés dans une sous-bande,
- quantifier les M sous-signaux en blocs en réaction aux informations d'attribution de bits ;
- loger les sous-signaux quantifiés et les informations d'attribution de bits dans une trame d'un deuxième signal numérique qui est composé de trames consécutives ;
- convertir le deuxième signal numérique en un troisième signal numérique de sorte qu'il soit approprié à une transmission par l'intermédiaire du support de transmission, et
- appliquer le troisième signal numérique au support de transmission,
caractérisé en ce que le procédé comprend en outre les étapes suivantes :
- appliquer un signal de commande de traitement de signaux ;
- soumettre à un traitement de signaux le signal à large bande en fonction du signal de commande de traitement de signaux ;
- produire, en réaction au signal à large bande traité, une pluralité de M sous-signaux à bande étroite à une fréquence d'échantillonnage diminuée, en divisant le signal à large bande traité en sous-bandes consécutives de numéros de bande m qui augmentent avec la fréquence, et
- dériver les informations d'attribution de bits à partir du signal à large bande traité divisé.

16. Procédé de transmission d'un signal à large bande par l'intermédiaire d'un support de transmission, lequel signal est échantillonné à une fréquence d'échantillonnage donnée Fₛ, par exemple un signal audio numérique, le procédé comprenant les étapes suivantes :
- recevoir le signal à large bande ;
- produire, en réaction au signal à large bande, une pluralité de M sous-signaux à bande étroite à une fréquence d'échantillonnage diminuée, en divisant le signal à large bande en sous-bandes consécutives de numéros de bande m qui augmentent avec la fréquence, dans lesquels m se conforme à 1 ≤ m ≤ M, un sous-signal étant composé de blocs de signaux consécutifs, chaque bloc de signaux comprenant q échantillons ;
- produire des informations d'attribution de bits indiquant la quantité de bits par laquelle les q échantillons d'un bloc de signaux sont représentés dans une sous-bande,
- quantifier les M sous-signaux en blocs en réaction aux informations d'attribution de bits ;
- loger les sous-signaux quantifiés et les informations d'attribution de bits dans une trame d'un deuxième signal numérique qui est composé de trames consécutives ;
- convertir le deuxième signal numérique en un troisième signal numérique de sorte qu'il soit approprié à une transmission par l'intermédiaire du support de transmission, et
- appliquer le troisième signal numérique au support de transmission,
caractérisé en ce que le procédé comprend en outre les étapes suivantes :
- appliquer un signal de commande de traitement de signaux ;
- corriger les informations d'attribution de bits dérivées de l'étape de production d'attribution de bits en fonction du signal de commande de traitement de signaux ;
- quantifier les sous-signaux en réaction aux informations d'attribution de bits.
